(19) Europäisches Patentamt

European Patent Office

Office européen des brevets

(11) Veröffentlichungsnummer: **0 400 197 B1**

(12) **EUROPÄISCHE PATENTSCHRIFT**

(45) Veröffentlichungstag der Patentschrift: **06.10.93**

(21) Anmeldenummer: **89110041.4**

(22) Anmeldetag: **02.06.89**

(51) Int. Cl.⁵: **G01C 19/72**

(54) **Verfahren und Einrichtung zur Demodulation des Drehratensignals eines Faserkreisels.**

(43) Veröffentlichungstag der Anmeldung:
**05.12.90 Patentblatt 90/49**

(45) Bekanntmachung des Hinweises auf die
Patenterteilung:
**06.10.93 Patentblatt 93/40**

(84) Benannte Vertragsstaaten:
**DE ES FR GB IT NL**

(56) Entgegenhaltungen:
**EP-A- 0 160 450**
**DE-A- 3 140 110**
**DE-A- 3 204 810**
**GB-A- 2 108 652**

(73) Patentinhaber: **LITEF GmbH**
**Lörracher Strasse 18**
**D-79115 Freiburg(DE)**

(72) Erfinder: **Schröder, Werner, Prof. Dr.**
**Vogtstrasse 5**
**D-7834 Herbolzheim 3(DE)**

(74) Vertreter: **TER MEER - MÜLLER - STEINMEI-**
**STER & PARTNER**
**Mauerkircherstrasse 45**
**D-81679 München (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren und eine Einrichtung zur Demodulation des Auslesesignals eines Faserkreisels, insbesondere eines für die Drehratenmessung bestimmten faseroptischen Sagnac-Interferometers.

Bisherige Demodulationsverfahren für das Auslesesignal eines Faserkreisels, speziell eines nicht rückgestellten Kreisels, zeigen in der Praxis eine Reihe von technischen Problemen.

Bei den weitaus häufigsten Auslesetechniken für Faserkreisel, sowohl bei Interferometer- als auch bei Resonatorkreiseln, wird das Licht im Kreisel mittels eines Modulators phasen- bzw. frequenzmoduliert. Das oder die opto-elektrischen Ausgangssignale werden dann synchron demoduliert, d. h. mit einem Signal multipliziert, das eine feste Phasenlage zum Modulationssignal hat, und dann tiefpaßgefiltert. Das so erhaltene Signal ist dann ein Maß für die Drehrate.

Insbesondere bei nicht rückstellenden Kreiselanordnungen ist der erforderliche Dynamikbereich für den Demodulator außerordentlich hoch, häufig größer als sechs Dekaden. Aufgrund der üblicherweise notwendigen hohen Frequenz von einigen 100 kHz ergeben sich große technische Probleme, einen Demodulator aufzubauen, der solchen Anforderungen genügt. Eine Reihe von weiteren, bisher nicht oder nur mit extrem hohem technischem Aufwand lösbare Schwierigkeiten werden im folgenden kurz genannt:

- Das Kreiselmodulationssignal oder Harmonische dieses Signals, beispielsweise aus einer digitalen Ansteuerung, geraten durch Einstreuung in den Eingang des Demodulators und treten durch die synchrone Demodulation als Offsetfehler auf.
- Schnelle Synchrondemodulatoren werden im wesentlichen aus FET-Schaltern aufgebaut und ihre Präzision leidet unter Fehlertermen, die durch Ladungsträgerinjektion während der Umschaltprozesse hervorgerufen werden.
- Bei Rechteckmodulation und -demodulation zeigt sich zusätzlich eine hohe Empfindlichkeit auf Änderungen der Phasendifferenz zwischen dem Modulationssignal und jenem Signal, das als Referenz dem Demodulator zugeführt wird.
- Eine digitale Synchrondemodulation, d. h. das Einlesen des über einen Photodetektor gewonnenen drehratenabhängigen Signals des Faserkreisels mit hoher Wiederholrate und nachfolgender digitaler Synchrondemodulation ist bei nicht rückgestellten Kreiselanordnungen technisch mit hoher Genauigkeit praktisch nicht zu verwirklichen, da A/D-Wandler benötigt werden, die sowohl sehr schnell als auch wegen des hohen Dynamikbereichs hochauflösend und sehr linear sein müssen. Solche A/D-Wandler stehen zumindest beim derzeitigen Stand der Technik nicht zur Verfügung.
- In den meisten Fällen ist mit einer Phasen- bzw. Frequenzmodulation des Lichtsignals im Faserkreisel eine Amplitudenmodulation (Verlustmodulation) verbunden. Dadurch kann sich die Forderung ergeben, Teile des Photodetektorsignals zu beschneiden bzw. auszutasten. Leider führen elektronische Austaster durch Ladungsträgerinjektion wiederum selbst zu Fehlern bzw. die Austastung ist unbefriedigend.

Der Erfindung liegt damit die Aufgabe zugrunde, ein Demodulationsverfahren und eine Demodulationseinrichtung für Faserkreisel anzugeben, durch die sich auf technisch gut beherrschbare Weise das Drehratensignal, insbesondere bei einem faseroptischen Sagnac-Interferometer, entweder direkt oder zur Steuerung der Rückstellglieder in der Auswerteelektronik bei rückstellenden Kreiseln dieser Art gewinnen läßt.

Die Erfindung ist bei einem Verfahren zur Demodulation des Drehratensignal eines zur Drehratenmessung bestimmten faseroptischen Kreisels, bei dem die in entgegengesetzter Richtung in eine Faserspule eingestrahlten, aus einer Lichtquelle durch Aufspaltung eines Lichtstrahls gewonnenen Teillichtstrahlen einer periodischen Phasenmodulation unterworfen werden und zur Erzielung einer gegenüber der Phasenmodulationsfrequenz niederfrequenten Demodulation das Licht oder das Auslesesignal des Faserkreisels vor der Demodulation mit der Phasenmodulation synchronisiert getastet wird, **dadurch gekennzeichnet**, daß die Tastung des Lichtsignals bzw. des Auslesesignals so gesteuert wird, daß während einer ersten Zeitspanne, die einem ganzzahligen Vielfachen der Periode des Phasenmodulationssignals entspricht, nur ein bestimmter erster Phasenabschnitt des periodischen Ausgangssignals des Kreisels zur weiteren Verarbeitung einer elektronischen Auswerteschaltung zugeführt wird, das nach der ersten Zeitspanne während einer zweiten oder gegebenenfalls weiterer aufeinanderfolgender Zeitspannen, die jeweils ebenfalls einem ganzzahligen Vielfachen der Periode des Phasenmodulationssignals entsprechen, nur ein zweiter oder gegebenenfalls aufeinanderfolgend jeweils nur ein weiterer Phasenabschnitt des periodischen Ausgangssignals des Kreisels der elektronischen Auswerteschaltung zugeführt wird, derart, daß nach einer der Anzahl der einzelnen Phasenabschnitte entsprechenden Mehrzahl von Tastfolgewechseln eine ganze, aus den einzelnen Phasenabschnitten zusammengesetzte Periode des Kreiselausgangssignals erfaßt wird, und dieser Tastfolgewechsel fortlaufend wiederholt wird, daß die Ausgangssignale jeweils eines durch den Tastvorgang erfaßten

EP 0 400 197 B1

Phasenabschnitts über die Dauer der jeweiligen Zeitspanne gemittelt werden, und daß die so gewonnenen gemittelten Signale der einzelnen Phasenabschnitte zur Gewinnung eines drehratenproportionalen Signals auf die Tastfolgewechsel abgestimmt demoduliert werden.

Wenn bei dieser Definition des Erfindungsgedankens von Phasenmodulation des Signals im Faserkreisel die Rede ist, so beinhaltet dieser Begriffje nach Gegebenheiten auch eine Frequenzmodulation.

Die Erfindung beruht auf der Erkenntnis, daß die üblicherweise hohe Kreiselbandbreite, die sich insbesondere beim Interferometer durch die aus anderen Gründen notwendige schnelle Kreiselmodulation ergibt, für das Kreiselausgangssignal oder das Drehratensignal gar nicht benötigt wird. Mit anderen Worten, wenn es gelingt, das Auslesesignal vor der Demodulation in einen niedrigeren Frequenzbereich zu transformieren, ergibt sich damit ein Ausleseprinzip, das den oben erläuterten praktischen Schwierigkeiten wesentlich besser gerecht wird und wegen des möglichen hohen Digitalanteils in der Auswerteelektronik kostengünstig in einer Serienfertigung zu verwirklichen ist.

Ein erfindungsgemäßer Demodulator für ein mit einer Referenzfrequenz amplitudenmoduliertes Drehratensignal eines zur Drehratenmessung bestimmten faseroptischen Kreisel, insbesondere eines Sagnac-Interferometers, bei dem ein von einer Lichtquelle ausgehender Lichtstrahl über eine Faserstrecke geleitet, einen ersten Richtkoppler durchläuft, an dessen einem Ausgang ein Photodetektor für das Auslesesignal angeschlossen ist, und in einem zweiten Richtkoppler in zwei Teillichtstrahlen aufgespalten wird, die in entgegengesetzter Richtung in eine Faserspule eingestrahlt und durch einen von einem Modulationssignalgenerator angesteuerten Phasenmodulator periodisch moduliert werden, und bei dem ein Auslesesignal des Photodetektors demoduliert und als Drehrate direkt ausgegeben oder als Rückstellsignal in einer Kreiselelektronik verwendet wird, ist **gekennzeichnet durch** einen Schaltsignalgenerator zur getasteten Steuerung der Lichtquelle in der Weise, daß während einer ersten Zeitspanne, die einem ganzzahligen Vielfachen der Periode der Referenzfrequenz entspricht, nur ein bestimmter erster Phasenabschnitt des amplitudenmodulierten Signals zur weiteren Verarbeitung durch die Demodulations- und Auswerteschaltung auftritt, durch eine Logikschaltung zur Triggerung des Schaltsignalgenerators in der Weise, daß nach der ersten Zeitspanne während einer zweiten Zeitspanne oder gegebenenfalls während aufeinanderfolgender weiterer Zeitspannen, die jeweils einem ganzzahligen Vielfachen der Periode des Phasenmodulationssignals entsprechen, nur ein zweiter bzw. aufeinanderfolgend jeweils nur ein weiterer Phasenabschnitt des periodischen Ausgangssignals des Kreisels auftritt, so daß nach einer der Anzahl der einzelnen erfaßten Phasenabschnitte entsprechenden Mehrzahl von Tastfolgewechseln eine ganze, aus der Folge der erfaßten Phasenabschnitte zusammengesetzte Periode des Kreiselausgangssignals erfaßt ist, wobei dieser Tastfolgewechsel laufend wiederholt wird, durch eine Schaltung zur Mittelung der Ausgangssignale der durch den Tastvorgang erfaßten Phasenabschnitte über die Dauer des jeweiligen Zeitraums, und durch einen auf die Tastfolge synchronisierten Demodulator zur Gewinnung des Drehratensignals.

Vergleicht man den Gegenstand der Erfindung mit dem einschlägigen Stand der Technik, so ergibt sich folgendes Bild:

Aus GB-A-21 08 652 ist ein faseroptischer Interferometerkreisel bekannt, der mit zwei Phasenmodulatoren arbeitet, die das Sagnac-Signal mit Biassignalen beaufschlagen, deren Periodendauer $\tau$ bzw. $2\tau$ betragen, wobei mit $\tau$ - wie oben erwähnt - die Laufzeit des Lichts durch die Faserspule bezeichnet ist. Um die durch die Biassignale bewirkte externe Phasenverschiebung nur auf eine der beiden gegenläufigen Lichtwellen in der Faserspule wirksam werden zu lassen, wird gleichzeitig die Laserlichtquelle synchron mit der Frequenz $1/2\tau$ geschaltet. Eine Reduzierung der Frequenz für das Kreiselausgangssignal wird damit nicht erreicht.

Nach der Lehre von EP-A-0 160 450 erfolgt ebenfalls eine Signaltastung mit der Modulationsfrequenz, also mit der Referenzfrequenz und die Phase des so aufbereiteten Signals wird in einer nachfolgenden Schaltung bestimmt, ohne daß eine Signalfaltung in einen wesentlich niedrigeren Frequenzbereich erfolgt.

Bei dem in DE-A-3 140 110 beschriebenen Drehratensensor wird das Problem der schwer zu demodulierenden Auslesesignale dadurch gelöst, daß das ursprünglich höher-frequente Signal durch geeignete Mischung in einen niederfrequenten Signalbereich transformiert wird. Dabei ergibt sich jedoch als Nachteil, daß wegen sehr kurzer Pulsdauern das Kreiselausgangssignal stark mit Rauschkomponenten belastet ist.

Die Signalfolge der den Phasenabschnitten des periodischen Ausgangssignals des Faserkreisels entsprechenden aufeinanderfolgenden Zeitspannen wird tiefpaßgefiltert, gegebenenfalls von unerwünschten Grundschwingungsanteilen befreit und steht dann als Auslesesignal mit einer Grundfrequenz zur Demodulation zur Verfügung, die wesentlich niedriger liegt als die im allgemeinen sehr hohe Frequenz, mit der die Phasenmodulation in oder an der Faserspule erfolgt. Im Prinzip kann diese niedrigere Frequenz für das Auslesesignal beliebig gewählt werden. Als Richtwerte können für die einzelnen Zeitspannen bzw. bei periodischem Wechsel der Abtastung der einzelnen Phasenabschnitte Periodendauern von 100 $\mu$s bis zu 1 ms angegeben werden.

3

EP 0 400 197 B1

Das erfindungsgemäße Demodulationsverfahren bzw. Demodulationsschaltungen mit erfindungsgemäßen Merkmalen werden nachfolgend in beispielsweisen Ausführungsformen unter Bezug auf die Zeichnung näher erläutert. Es zeigen:

Fig. 1      den Prinzipaufbau eines Faserkreisels; im dargestellten Beispiel ein Sagnac-Interferometer;

Fig. 2a bis 2h      Signalverläufe zur Erläuterung des erfindungsgemäßen Demodulationsverfahrens an verschiedenen Punkten bzw. Abschnitten des Faserkreisels gemäß Fig. 1 einerseits bzw. einer Erreger- und Demodulatorschaltung gemäß Fig. 3 andererseits;

Fig. 3      eine Demodulatorschaltung mit zugeordneter Pulserregerschaltung für die Lichtquelle im Faserkreisel nach Fig. 1;

Fig. 4a bis 4d      eine gegenüber der Fig. 2 abgewandelte zeitkorrelierte Darstellung von Signalverläufen bei einer anderen Art der Modulation des Kreiselsignals;

Fig. 5      eine gegenüber der Schaltung nach Fig. 3 abgewandelte Ausführungsform für einen digitalen Demodulator;

Fig. 6      ein weiteres Ausführungsbeispiel für eine kostengünstig herstellbare Demodulatorschaltung, die nach dem Dual-Slope-Prinzip arbeitet; und

Fig. 7a bis 7g      die zeitkorrelierte Darstellung von Signalverläufen zur Erläuterung der Arbeitsweise der Schaltung nach Fig. 6.

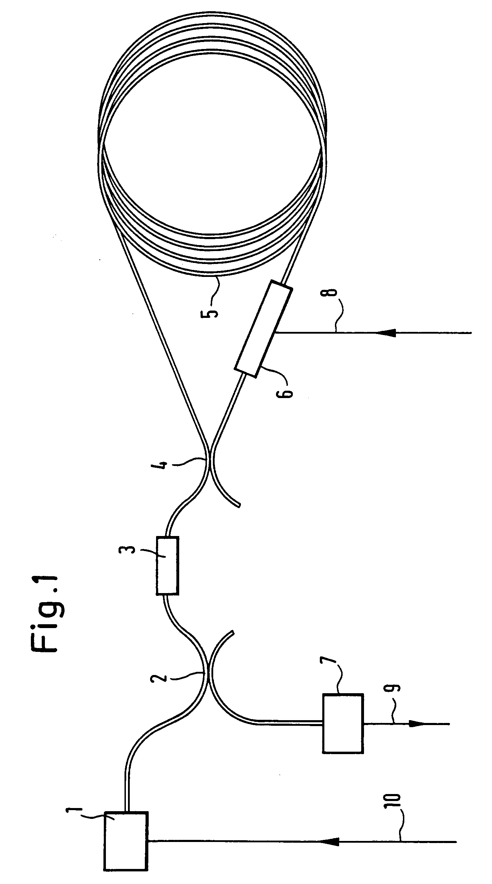

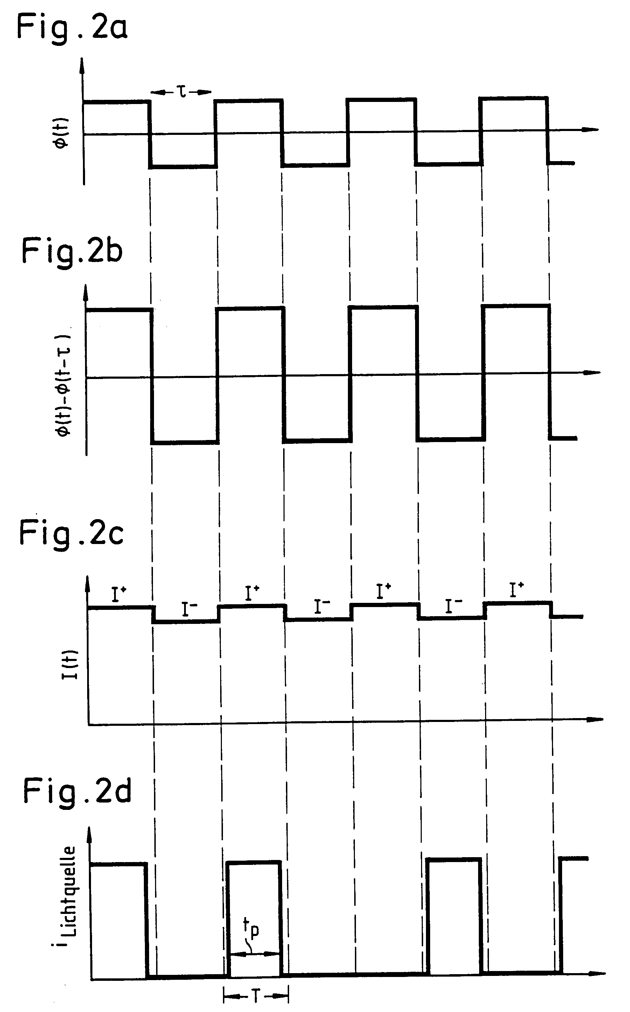

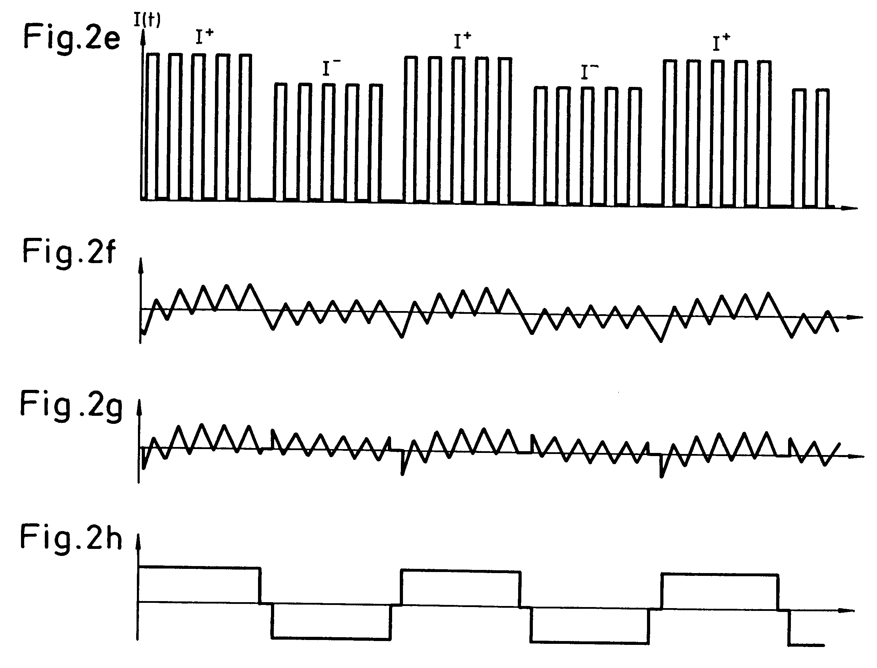

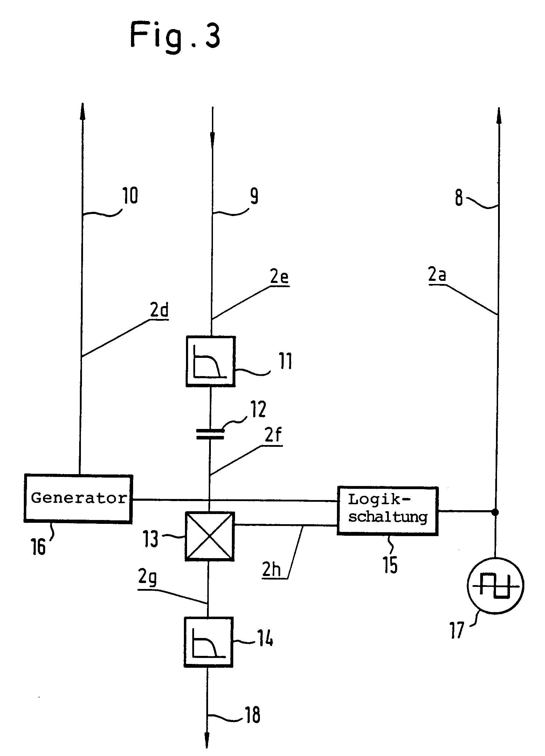

Das Prinzip des erfindungsgemäßen Demodulationsverfahrens sei zunächst unter Bezug auf das in Fig. 1 dargestellte Faserkreiselinterferometer in Verbindung mit den Fig. 2a bis 2h sowie unter Bezug auf Fig. 3 erläutert.

Das Licht einer Lichtquelle 1 durchquert einen ersten Richtkoppler 2, einen Polarisator 3 und wird dann in einem zweiten Richtkoppler 4 in zwei Teillichtstrahlen aufgespalten, die in entgegengesetzter Richtung eine Faserspule 5 durchlaufen. Beide Teillichtstrahlen werden zusätzlich einer Phasenmodulation in einem Phasenmodulator 6 unterworfen, der vorzugsweise an einem Ende der Faserspule 5 angebracht ist. Der Phasenmodulator 6 wird mit einem Ansteuersignal 8 beaufschlagt, das zu einer im allgemeinen zeitabhängigen Phasenmodulation in der Interferometeranordnung führt. Als Folge der Modulation und der sich durch eine inertiale Drehrate $\Omega$ ergebenden Sagnacphase $\Phi_s$ wird an einem am Richtkoppler 2 angeschlossenen Photodetektor 7 ein Auslesesignal I(t) auf einem Auslesekanal 9 erhalten. Der Strom i(t) zum Betrieb der Lichtquelle 1 wird über eine Leitung 10 zugeführt.

In guter Näherung ergibt sich für die Transferfunktion des Interferometerkreises:

$$I(t) = I_0 (1 + \cos(\Phi_s + \Phi(t) - \Phi(t-\tau))) \qquad (1)$$

mit der Sagnac-Phase

$$\Phi_s = \frac{4\pi \cdot L \cdot R}{\lambda \cdot c} \cdot \Omega \qquad\qquad\qquad (2)$$

worin mit $I_0$ eine konstante Lichtintensität (konstante Lichtstärke durch konstanten Strompegel $i_0$ der Lichtquelle), mit r die Laufzeit des Lichts durch die Faserspule 5, mit L die Länge der Faserspule 5, mit R der mittlere Radius der Faserspule 5, mit $\lambda$ die mittlere Wellenlänge des Lichts der Lichtquelle 1 und mit c die Vakuumlichtgeschwindigkeit bezeichnet sind.

Als Lichtquelle 1 eines Interferometerkreises dient im allgemeinen entweder eine Laserdiode oder eine Superlumineszenzdiode (SLD). Beide Typen haben eine sehr hohe Bandbreite von mehr als 1 GHz. Es sind Applikationsschaltungen zur Diodenansteuerung mit mehreren 100 MHz Bandbreite bekannt. Das Ein- und Ausschalten der Lichtquelle 1 (Diode) kann also außerordentlich schnell erfolgen. Es ist daher, wie mit der Erfindung vorgeschlagen, möglich, die Lichtquelle 1 über die Stromzuleitung 10 zum Ein- bzw. Austasten der gewünschten Lichtsignale im Kreisel zu nutzen.

Die Fig. 2a veranschaulicht das Ansteuersignal des Phasenmodulators 6 bei Rechtecksignalansteuerung mit etwa der optimalen Frequenz $\tau$, d. h. einer Frequenz, bei der die Laufzeit des Lichts durch die Faserspule 6 der Hälfte der Periode der Modulationsfrequenz entspricht. Fig. 2b zeigt die Phasendifferenz $\Delta \Phi$ im Kreisel, die sich als Folge einer derartige Modulation ergibt. Fig. 2c veranschaulicht den zeitlichen Verlauf des Auslesesignals I(t) des Photodetektors 7 (Photodiode) bei Vorliegen einer Drehrate.

4

Bei der synchronen Demodulation werden nun jeweils zwei aufeinanderfolgende Signale $I^+$ und $I^-$ miteinander verglichen und ihre Differenz wird als Phasendifferenz interpretiert - bei nicht rückgestellten Kreiselanordnungen direkt als Drehrate und bei rückgestellten Kreiselanordnungen als Fehler- oder Korrektursignal für die Kreiselrückstellung.

Der Grundgedanke des erfindungsgemäßen Verfahrens geht nun dahin, die Lichtquelle mit einem getasteten Signal $i(t)$ für eine bestimmte Zeitspanne, die einem Vielfachen der Periode des Modulationssignals entspricht und beispielsweise eine Dauer von 100 $\mu$s bis 1 ms hat, im Wechsel so anzusteuern, daß nur das Signal $I^+$ auftritt und dann für den gleichen Zeitraum nur das Signal $I^-$.

Die für eine solche Ansteuerung erforderliche Signalfolge in der Stromzuführung 10 der Lichtquelle 1 zeigt die Fig. 2d. Diese Signalfolge wird von einem Generator 16 (Fig. 3) erzeugt, der entsprechend von einer Logikschaltung 15 getriggert wird. Die sich ergebende Signalfolge des Auslesesignals des Photodetektors 7 auf der Leitung 9 zeigt die Fig. 2e. Dieses Signal gelangt zunächst auf ein Tiefpaßfilter 11 und wird über eine Kondensatorkopplung 12 vom Gleichspannungsanteil befreit und sodann einem Rechteckdemodulator 13 zugeführt, der auf die langsame Wechselfrequenz der Phasenlage der Pulse der SLD-Eintastung synchronisiert ist. Zum besseren Verständnis ist das Signal nach der Kondensatorkopplung 12 in Fig. 2f und das Referenzsignal des Rechteckdemodulators 13 in Fig. 2h dargestellt.

Ein Rechteckfrequenzgenerator 17 steuert den Phasenmodulator 6 (Fig. 1) über eine Leitung 8 mit dem Modulationssignal gemäß Fig. 2a an.

Als Ausgangssignal des Rechteckdemodulators 13 erhält man das Produkt aus den Signalen von Fig. 2f und 2h, nämlich die Signalfolge gemäß Fig. 2g. Dieses Signal wird über ein Tiefpaßfilter 14 geleitet und steht als drehratenproportionales Signal 18 am Ausgang zur Verfügung.

Die jetzt gegebene relativ langsame (niederfrequente) Demodulation kann mit einem vergleichsweise sehr preiswerten Demodulatorbaustein erreicht werden, der bei den möglichen niederen Frequenzen sehr nullpunktstabil und linear arbeitet. Gut geeignet und für die Zwecke der Erfindung erprobt ist der Demodulatorbaustein AD 630, ein analoger Demodulator.

Um bei dem erfindungsgemäßen Demodulationsverfahren keine Unsymmetrien zu erhalten, ist es, wie oben erwähnt, erforderlich, daß sich beim Phasenwechsel der Lichtquelleneintastung nur die Phasenlage, aber nicht die Signalform oder -höhe (Lichtstärke der Quelle, Lichtamplitude) ändert. Allerdings sind Langzeitschwankungen ohne Bedeutung. Diese Forderung kann durch geeignete Stabilisierungsmaßnahmen bekannter Art leicht erreicht werden.

Für den Fachmann ist ersichtlich, daß der die Lichtquellenpulse erzeugende Generator 16 völlig unabhängig von der übrigen Elektronik laufen sollte; nur zur Synchronisation wird ein entsprechendes Triggersignal von der Logikschaltung 15 bezogen.

Um weitere Einflüsse z. B. von Schwingungen des Phasenmodulators 17 bei Ausführung in integrierter Optik oder gewisse Taktzeitvariationen auszuschalten, ist es von Vorteil, die Pulszeit $t_p$ (Fig. 2d) etwas kleiner als die halbe Periodendauer des Modulationssignals zu wählen.

Bei rückstellenden Kreiseln kann das Ausgangssignal 18 dem Regler (nicht dargestellt) zugeführt werden, der das Rückstellsignal regelt.

Wegen der langsamen Demodulationsfrequenz sind nun auch digitale Demodulationsverfahren gut geeignet.

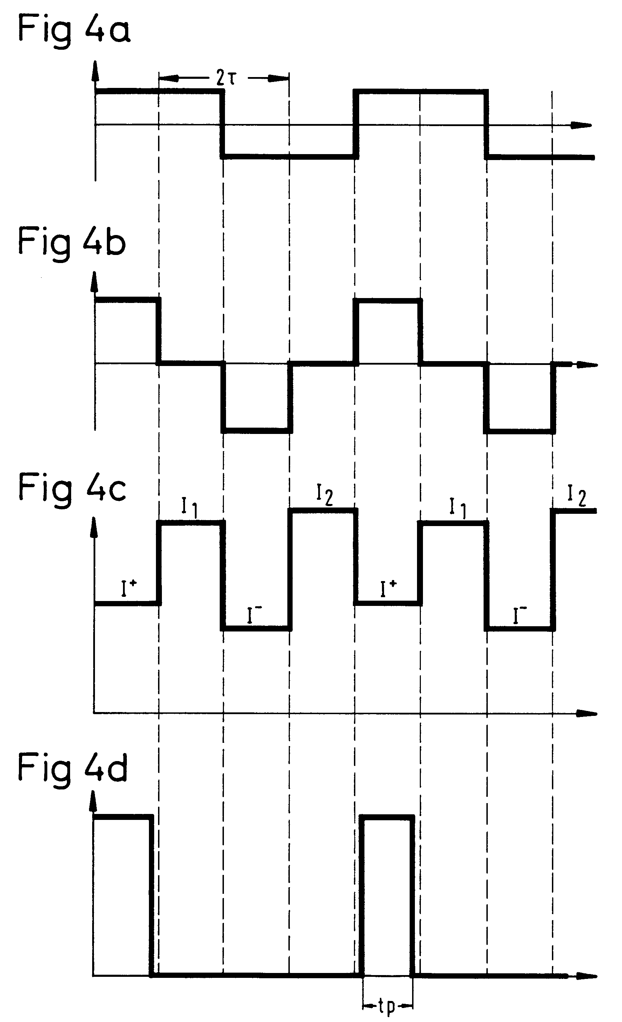

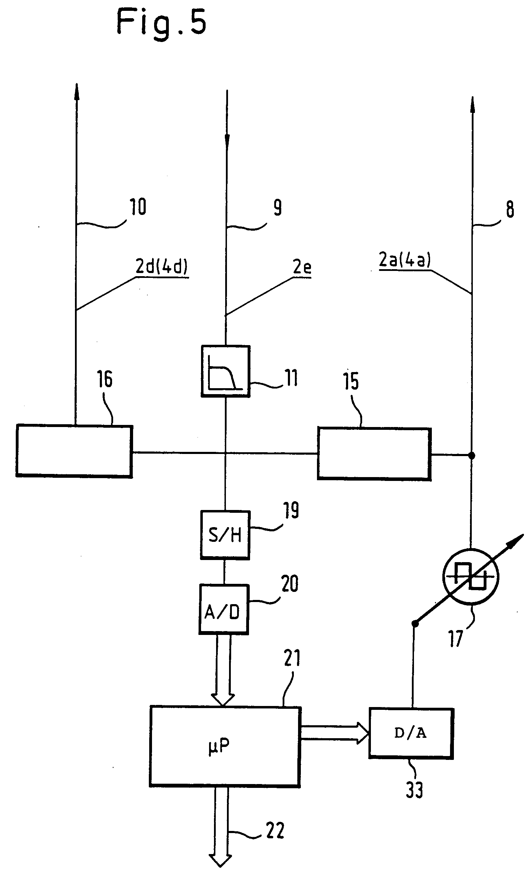

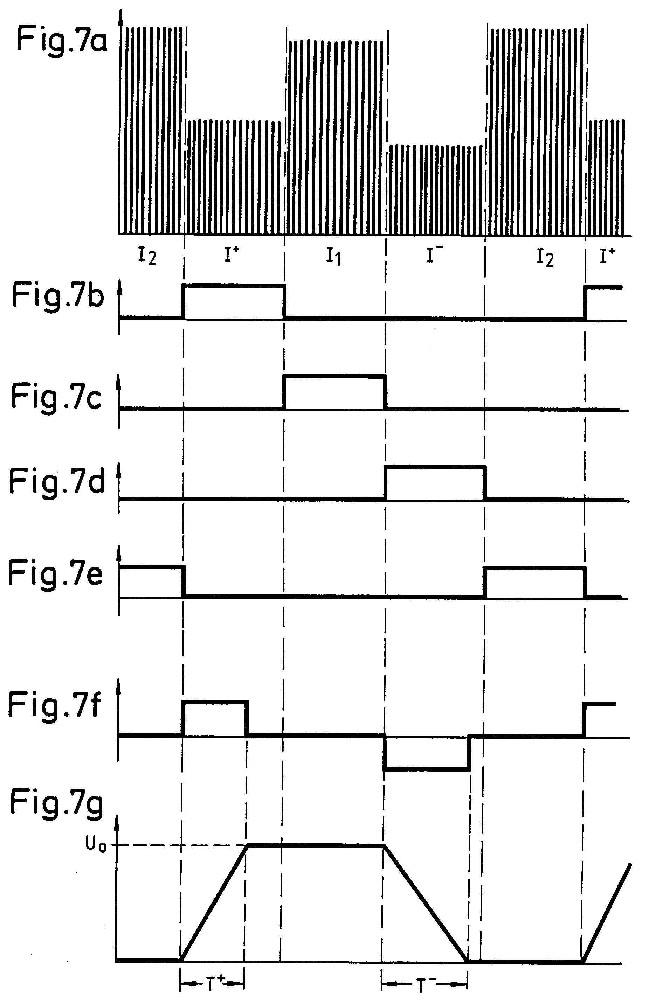

Fig. 5 zeigt eine Demodulationsschaltung, die sowohl mit der Signalfolge gemäß Fig. 2a bis 2f als auch mit einer nachfolgend beschriebenen Signalfolge gemäß den Fig. 4a bis 4d bzw. Fig. 7a betrieben werden kann.

Der Unterschied der Schaltung der Fig. 5 zu der nach Fig. 3 liegt darin, daß das in 11 tiefpaßgefilterte Signal über ein Abtast-Halte-Glied 19 (Sample-Hold-Schaltung) einem Analog/Digital-Wandler 20 zugeführt und mittels eines Signalprozessors 21 verarbeitet wird. Der Signalprozessor 21 führt die gleiche Funktion aus wie der Rechteckdemodulator 13; er kann aber auch noch zusätzliche Signale digital filtern und unter Umständen auch die Funktion der Logikschaltung 15, des Phasenmodulators 17 und des Generators 16 für die Lichtquellenansteuerung mit übernehmen. Der Signalprozessor 21 liefert ein digitales Ausgangssignal 22, das entweder direkt als drehratenproportionales Signal ausgegeben und angezeigt oder einem Rückstellregler zugeführt werden kann.

Für nicht rückgestellte Kreiselanordnungen wird es in der Regel noch notwendig sein, zusätzlich eine Stabilisierung des Skalenfaktors vorzusehen. Eine Möglichkeit dazu wird unter Benutzung der Grundidee des erfindungsgemäßen Verfahrens mit Bezug auf die Fig. 4a bis 4d und Fig. 7a (Signalverlauf) anhand des Schaltungsaufbaus der Elektronik nach Fig. 5 erläutert.

In diesem Fall entspricht die Modulationsfrequenz für den Kreisel der Hälfte der optimalen Kreiselfrequenz, d. h. die Periode des Ansteuersignals auf der Leitung 8 (Fig. 4a) des Phasenmodulators 6 ist etwa viermal so groß wie die Laufzeit $\tau$ des Lichts durch die Faserspule 5. Als Phasendifferenz $\Delta \Phi = \Phi(t) - \Phi(t-\tau)$

ergibt sich nun ein Signal gemäß Fig. 4b. Bei kontinuierlichem Betrieb der Lichtquelle 1 und einer bestimmten Drehrate würde sich das Signal gemäß Fig. 4c als Auslesesignal auf der Signalleitung 9 ergeben. Nun wird aber erfindungsgemäß die Lichtquelle 1 mit Hilfe des Generators 16 so getastet (Ansteuersignal Fig. 4d), daß für eine gewisse Zeitspanne am Photodetektor 7 nur ein Signal $I^+$ erscheint, dann $I_1$, dann $I^-$ und schließlich $I_2$ und, wieder neu beginnend, $I^+$, usw. Auf der Ausleseleitung 9 ergibt sich nun ein Signal, wie es die Fig. 7a zeigt. Dieses Signal wird in 11 tiefpaßgefiltert und über das Abtast-Halteglied 19 und den Analog/Digital-Wandler 20 in den Signalprozessor 21 eingelesen und wie folgt verrechnet:

Der Phasenmodulator 6 bewirke den Hub $\Phi_M$. Dann ist

$$I^+ = I_0(1 + \cos(2\Phi_M + \Phi_s))$$

und

$$I^- = I_0(1 + \cos(-2\Phi_M + \Phi_s)).$$

Bei linearer Amplitudenmodulationskennlinie des Phasenmodulators 17 ergibt sich:

$$I_1 = (I_0 + \Delta I) \cdot (1 + \cos(\Phi_s))$$

und

$$I_2 = (I_0 - \Delta I) \cdot (1 + \cos(\Phi_s))$$

woraus folgt:

$$I_1 + I_2 = 2I_0 \cdot (1 + \cos(\Phi_s))$$

Für $I^+ - I^-$ ergibt sich mit der Sagnac-Phase $\Phi_s$ (siehe Gleichung 2):

$$I^+ - I^- = -2I_0 \cdot \sin(2\Phi_M) \cdot \sin(\Phi_s).$$

Für $I^+ + I^-$ ergibt sich

$$I^+ + I^- = 2I_0(1 + \cos(2\Phi_M) \cdot \cos(\Phi_s).$$

Das vollständige Signal $I^+ + I^- - (I_1 + I_2)/2$ kann zur Regelung des Hubs der Phasenmodulation auf $\pi/4$ mittels eines Digital/Analog-Wandlers 33 (Fig. 5) verwendet werden. Bei kleinen Drehraten ($\cos\Phi_s \approx 1$) ergibt sich:

$$I_1 + I_2 \approx 4I_0$$

und damit

$$I^+ + I^- - (I_1 + I_2)/2 = 2I_0(1 + \cos(2\Phi_M) \cdot \cos\Phi_s) - 2I_0 =$$
$$= 2I_0 \cdot \cos(2\Phi_M) \cdot \cos\Phi_s$$

Die Regelung des Phasenmodulatorhubs darf also nur bei kleinen Drehraten aktiv sein. Bei einem Phasenhub von $\pi/4$ ergibt sich

$$I^+ - I^- = -2I_0 \cdot \sin(\Phi_s)$$

und damit die Sagnac-Phase zu

$$\Phi_s = \arcsin \left(\frac{I^+ - I^-}{I^+ + I^-}\right)$$

oder

$$\Phi_s = -2\arctan \left(\frac{I^+ - I^-}{I_1 + I_2}\right)$$

Der Arcussinus (arcsin) oder Arcustangens (arctan) ist vorteilhafterweise einer Tabelle im Signalprozessor, eingegeben über die Prozessor-Software, zu entnehmen.

Eine digitale Division kann vermieden werden, wenn das optische Signal der Lichtquelle 1 entweder mittels des Lichtquellenstroms i(t) oder mit einer Verstärkungsregelung des Auslesesignalverstärkers (aus Gründen der übersichtlichen Darstellung nicht gezeigt) so geregelt wird, daß

$I^+ + I^-$

konstant bleibt (in Fig. 5 nicht eingezeichnet).

Bei sehr hohen Drehraten überschreitet die Sagnac-Phase $\Omega_s$ den Wert $\pi/2$. Mit einer prinzipiell bekannten Softwarelogik können diese Überschreitungen detektiert und im Ausgangssignal 22 des Mikroprozessors 21 berücksichtigt werden.

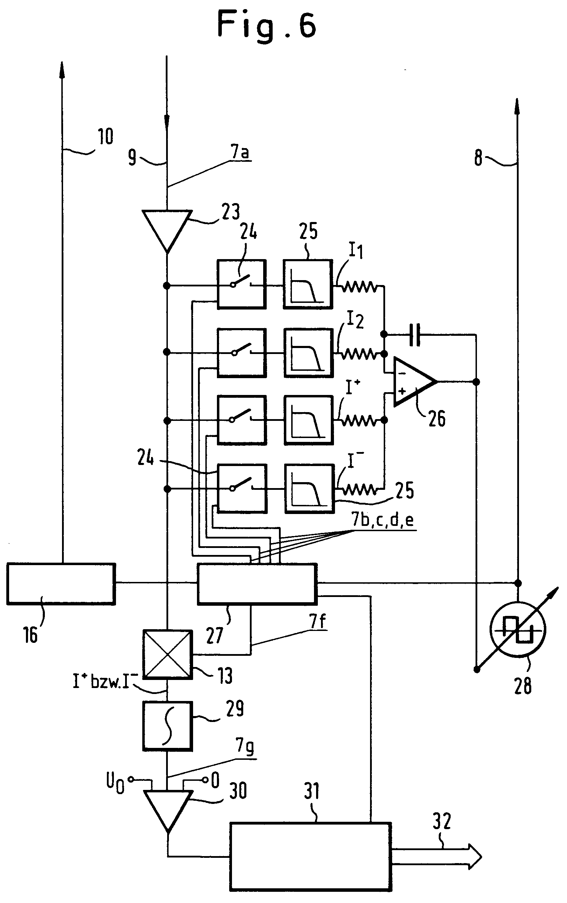

Eine Alternative zur Verwendung eines Signalprozessors zeigt die Fig. 6. Die Messung der Drehrate erfolgt hier mittels einer als "Dual-Slope-Verfahren" bekannten Methode.

Der Phasenmodulator 6 wird wiederum mit einem Signal gemäß Fig. 4a angesteuert, also mit etwa der halben optimalen Frequenz. Das Auslesesignal am Photodetektor 7, das sich durch entsprechende Ansteuerung der Lichtquelle 1 mittels des Generators 16, wie in Fig. 7a gezeigt, ergibt, wird durch einen Verstärker 23 verstärkt und über vier elektronische Schalter 24, deren Ansteuersignale von einer Logikschaltung 27 als Schaltzeitgeber erzeugt werden und in den Fig. 7b bis 7e dargestellt sind, vier Tiefpässen 25 derart zugeführt, daß sich an deren Ausgängen die Signale $I^+$, $I^-$, $I_1$ und $I_2$ gemäß Fig. 7a ergeben. Diese vier Signale werden - wie im Signalprozessor 21 bei Fig. 5 - jetzt jedoch analog in einem integrierenden Verstärker 26 verrechnet, der gleichzeitig als Regler für den Frequenzgenerator 28 ausgelegt ist, so daß dessen Amplitude so gesteuert wird, daß $I^+ + I^-$ $(I_1 + I_2)2$ im wesentlichen zu Null wird. Da hohe Drehraten im allgemeinen nur kurzzeitig auftreten, wird bei großer Regelzeitkonstante $\cos(\Phi_s) = 1$ im Mittel erfüllt sein.

Der Rechteckdemodulator 13 wird von der Logikschaltung 27 nun so angesteuert (vgl. Signalverlauf Fig. 7f), daß das Signal $I^+$ mit positivem Vorzeichen einen Integrator 29 beaufschlagt, bis eine bestimmte Spannung $U_0$ am Ausgang des Integrators erreicht ist, danach mit umgekehrtem Vorzeichen das Signal $I^-$, bis ein Nulldurchgang des Ausgangssignals des Integrators 29 wieder erreicht wird. Den Verlauf dieses Signals zeigt die Fig. 7g. Die Zeitpunkte des Erreichens der Spannung $U_0$ bzw. des Nulldurchgangs der Spannung gemäß Fig. 7g wird mittels eines Komparators 30 detektiert. Die Zeitdauern der Signale $T^+$ und $T^-$ (Fig. 7g) werden mittels Zähler, beispielsweise innerhalb eines Signalprozessors 31, gemessen, der auch die Logikschaltung 27 triggert. Es ist dann

$T^+/T^- = I^+/I^-$

und damit

$$I^+ - I^- = I_0 \left(\frac{T^- - T^+}{T}\right).$$

Mit T $=$ T$^+$ + T$^-$ ergibt sich dann für die Drehrate

$$\Phi_s = \arcsin \left(\frac{T^+ - T^-}{2T}\right).$$

Diese Operation kann auch von einem Schnittstellenprozessor eines übergeordneten Rechnersystems durchgeführt werden, um die Drehrate zu erhalten, die bei der Schaltbilddarstellung der Fig. 6 an einem Ausgang des Prozessors 31 erscheint.

Mit dem Dual-Slope-Verfahren läßt sich bei relativ geringem technischem Aufwand die Drehrate mit einer Genauigkeit von besser als 100 ppm analog zu digital bestimmen.

Dieses Verfahren bietet sich also auch zur Gewinnung des für die Skalenfaktorstabilisierung erforderlichen Terms I$^+$-I$^-$ für rückstellende Kreiselanordnungen an.

Alternativ können die Signale I$^+$ und I$^-$ bei der Schaltung nach Fig. 6 auch nach den entsprechenden Tiefpässen 25 abgenommen und verarbeitet werden.

Bei der bisherigen Beschreibung ist davon ausgegangen worden, daß zum Eintasten der Lichtsignale immer die Lichtquelle 1 verwendet wird. Alternativ dazu kann der gleiche Effekt erzielt werden, wenn - bei kontinuierlich laufender Lichtquelle 1 - das Licht im Interferometer an einer oder mehreren Stellen elektrooptisch unterbrochen wird oder wenn das Auslesesignal des Photodetektors 7 zu den entsprechenden Zeitpunkten unterbrochen bzw. auf Null gesetzt wird.

Bei großer Länge der Faser in der Spule 5 wird die erforderliche Modulationsfrequenz des Kreisels vergleichsweise klein und damit auch die Wechselfrequenz der Phasenschiebung in der Lichtquellenansteuerung. Dadurch kann es zu Aliasing-Effekten mit höherfrequenten Kreiselsignalen kommen. Im Rahmen der Erfindung bietet sich eine Abhilfe durch eine Zufallsteuerung des Phasenwechsels der Lichtquellenansteuerung an. Natürlich muß in diesem Fall die Auswerteelektronik jeweils der aktuellen Phasenlage durch angepaßte Triggerung folgen.

Die besonderen Vorteile des erfindungsgemäßen Prinzips seien im folgenden zusammengefaßt:

- Die Bandbreite des Photodetektors 7 und der Signalverstärkerelektronik kann um den Faktor 100 bis 1000 reduziert werden.
- Die Fehlersignalaustastung erfolgt, unterstützt durch die Kennlinienform der Lichtquelle 1, optisch ideal. Dadurch wird die Kreiselmodulationsfrequenz unkritisch, braucht nicht nachgeregelt zu werden und kann mit Systemfrequenzen synchron laufen.
- Die Forderung an die Spezifikation für die zulässige Stärke der Amplitudenmodulation des Phasenmodulators wird wesentlich entschärft.
- Die Modulationsfrequenz des Phasenmodulators 6 und Harmonische werden in der Auswerteelektronik nicht genutzt. Daher sind Einstreuungen in die Auswerteelektronik völlig unkritisch.
- Der verwendete Demodulator braucht nur langsam zu sein; die Umschaltung kann während der Austastperioden relativ langsam erfolgen. Wegen der vergleichsweise seltenen und langsamen Umschaltung sind Probleme aufgrund von Ladungsträgerinjektion nicht zu erwarten.
- Bei digitaler Demodulation können langsame und sehr präzise A/D-Wandlungsverfahren, wie das kostengünstige Dual-Slope-Verfahren angewendet werden.
- Das Kreiselrauschen, bedingt durch Photonenrauschen, erhöht sich durch die Austastung nicht, da der gepulste Lichtquellenstrom ohne Lebensdauereinbuße deutlich höher gewählt werden kann als der zulässige Dauerstrich-Diodenstrom. Wesentlich für die Lebensdauer ist bei dem jeweils angewendeten Schaltverhältnis (Duty-Faktor) nur die mittlere Verlustleistung in der Lichtquelle 1.

## Patentansprüche

1. Verfahren zur Demodulation des Drehratensignals eines zur Drehratenmessung bestimmten faseroptischen Kreisels, bei dem die in entgegengesetzter Richtung in eine Faserspule (5) eingestrahlten, aus einer Lichtquelle (1) durch Aufspaltung eines Lichtstrahls gewonnenen Teillichtstrahlen einer periodischen Phasenmodulation unterworfen werden und zur Erzielung einer gegenüber der Phasenmodulationsfrequenz niederfrequenten Demodulation das Lichtsignal oder das Auslesesignal des Faserkreisels vor der Demodulation mit der Phasenmodulation synchronisiert getastet wird, **dadurch gekennzeichnet**, daß die Tastung des Lichtsignals bzw. des Auslesesignals so gesteuert wird, daß während einer ersten Zeitspanne, die einem ganzzahligen Vielfachen der Periode des Phasenmodulationssignals entspricht, nur ein bestimmter erster Phasenabschnitt des periodischen Ausgangssignals des Kreisels zur weiteren Verarbeitung einer elektronischen Auswerteschaltung zugeführt wird, und daß nach der ersten Zeitspanne während einer zweiten oder gegebenenfalls weiterer aufeinanderfolgender Zeitspannen, die jeweils ebenfalls einem ganzzahligen Vielfachen der Periode des Phasenmodulationssignals entsprechen, nur ein zweiter oder gegebenenfalls aufeinanderfolgend jeweils nur ein weiterer Phasenabschnitt des periodischen Ausgangssignals des Kreisels der elektronischen Auswerteschaltung zugeführt wird derart, daß nach einer der Anzahl der einzelnen Phasenabschnitte entsprechenden Mehrzahl von Tastfolgewechseln eine ganze, aus den einzelnen Phasenabschnitten zusammengesetzte Periode des Kreiselausgangssignals erfaßt wird,

- dieser Tastefolgewechsel fortlaufend wiederholt wird,
- die Ausgangssignale jeweils eines durch den Tastvorgang erfaßten Phasenabschnitts über die Dauer der jeweiligen Zeitspanne gemittelt werden, und daß
- die so gewonnenen gemittelten Signale der einzelnen Phasenabschnitte zur Gewinnung eines drehratenproportionalen Signals auf die Tastfolgewechsel abgestimmt demoduliert werden.

2. Verfahren nach Anspruch 1, **dadurch gekennzeichnet,** daß die Periode des Phasenmodulationssignals etwa auf die doppelte Laufzeit des Lichts in der Faserspule (5) abgestimmt wird, daß der Tastfolgewechsel des Lichtsignals bzw. des Auslesesignals so erfolgt, daß zunächst Phasenabschnitte mit auf den positiven Phasenhub des Phasenmodulationssignals bezogenem Auslesesignal und sodann Phasenabschnitte mit auf den negativen Phasenhub bezogenem Auslesesignal erfaßt werden und daß das drehratenproportionale Signal direkt als Maß für die Drehrate ausgegeben wird.

3. Verfahren nach Anspruch 1, **dadurch gekennzeichnet,** daß die Periode des Phasenmodulationssignals ungleich der doppelten Laufzeit des Lichts durch die Faserspule (5) gewählt und vorzugsweise etwa auf das Vierfache der Laufzeit des Lichts durch die Faserspule (5) abgestimmt wird, daß der Tastfolgewechsel des Lichtsignals bzw. des Auslesesignals so erfolgt, daß zunächst erste Phasenabschnitte mit auf den positiven Phasenhub des Phasenmodulationssignals bezogenem Auslesesignal ($I^+$), sodann zweite Phasenabschnitte mit auf die Lichtintensität bezogenem Auslesesignal ($I_1$), des weiteren dritte Phasenabschnitte mit auf den negativen Phasenhub des Phasenmodulationssignals bezogenem Auslesesignal ($I^-$) und sodann vierte Phasenabschnitte mit auf die Lichtintensität bezogenem Auslesesignal ($I_2$) erfaßt werden, und daß die gemittelten, auf die ersten und dritten Phasenabschnitte bezogenen Auslesesignale als drehratenproportionales Signal demoduliert und die gemittelten, auf die zweiten und vierten Phasenabschnitte bezogenen Auslesesignale mit den Signalen aus dem ersten und dritten Phasenabschnitt verglichen und zur Modulatorphasenstabilisierung verwendet werden.

4. Verfahren nach Anspruch 1, **dadurch gekennzeichnet,** daß der Tastfolgewechsel periodisch mit einer Halbperiodendauer von etwa 100 $\mu$s bis 1 ms erfolgt.

5. Verfahren nach Anspruch 1, **dadurch gekennzeichnet,** daß der Tastfolgewechsel zur Vermeidung von Aliasing-Effekten mit aperiodischer Wechselfrequenz erfolgt.

6. Verfahren nach Anspruch 1, **dadurch gekennzeichnet,** daß bei der Demodulation des Drehratensignals die gemittelten Signale aus verschiedenen Phasenabschnitten mit unterschiedlichem Vorzeichen gemittelt werden.

7. Verfahren nach Anspruch 1, **dadurch gekennzeichnet,** daß die Auslese-Signalanteile verschiedener Phasenabschnitte über sequentiell ansteuerbare Schalter (24) Tiefpässen (25) zugeführt werden und aus den so gewonnenen gemittelten Phasenabschnittsignalen die Drehrate gewonnen wird.

8. Verfahren nach einem der vorstehenden Ansprüche, **dadurch gekennzeichnet,** daß die Lichtquelle (1) mit stets gleicher Lichtstärke, d. h. gleicher Erregerstromamplitude, betrieben und mit Pulsen getastet wird, deren Zeit ($t_p$) etwas kürzer ist als die Laufzeit des Lichts in der Faserspule (5).

9. Demodulator für ein Drehratensignal eines zur Drehratenmessung bestimmten faseroptischen Kreisels, insbesondere Sagnac-Interferometers, bei dem ein von einer Lichtquelle (1) ausgehender Lichtstrahl, über eine Faserstrecke geleitet, einen ersten Richtkoppler (2) durchläuft, an dessen einem Ausgang ein Photodetektor (7) für das Auslesesignal angeschlossen ist, und in einem zweiten Richtkoppler (4) in zwei Teillichtstrahlen aufgespalten wird, die in entgegengesetzter Richtung in eine Faserspule (5) eingestrahlt und durch einen von einem Modulationssignalgenerator (17; 28) angesteuerten Phasenmo-

EP 0 400 197 B1

dulator (6) periodisch moduliert werden, und bei dem ein Auslesesignal des Photodetektors (7) demoduliert und als Drehrate direkt ausgegeben oder als Rückstellsignal in einer Kreiselelektronik verwendet wird, **gekennzeichnet durch**

- einen Schaltsignalgenerator (16) zur getasteten Steuerung der Lichtquelle (1) in der Weise, daß während einer ersten Zeitspanne, die einem ganzzahligen Vielfachen der Periode des Phasenmodulationssignals entspricht, nur ein bestimmter erster Phasenabschnitt des periodischen Ausgangssignals des Kreisels zur weiteren Verarbeitung durch die Demodulations- und Auswerteschaltung auftritt,

- eine Logikschaltung (15; 27) zur Triggerung des Schaltsignalgenerators (16) in der Weise, daß nach der ersten Zeitspanne während einer zweiten Zeitspanne oder gegebenenfalls während aufeinanderfolgender weiterer Zeitspannen, die jeweils einem ganzzahligen Vielfachen der Periode des Phasenmodulationssignals entsprechen, nur ein zweiter bzw. aufeinanderfolgend jeweils nur ein weiterer Phasenabschnitt des periodischen Ausgangssignals des Interferometers auftritt, so daß nach einer der Anzahl der einzelnen erfaßten Phasenabschnitte entsprechenden Mehrzahl von Tastfolgewechseln eine ganze, aus der Folge der erfaßten Phasenabschnitte zusammengesetzte Periode des Kreiselausgangssignals erfaßt ist, und daß dieser Tastfolgewechsel laufend wiederholt wird,

- eine Schaltung zur Mittelung der Ausgangssignale der durch den Tastvorgang erfaßten Phasenabschnitte über die Dauer des jeweiligen Zeitraums, und

- einen auf die Tastfolge synchronisierten Demodulator (13; 19, 20, 22; 13, 29, 30, 31) zur Gewinnung des Drehratensignals.

**10.** Einrichtung nach Anspruch 9, **dadurch gekennzeichnet,** daß die Tastsignalfolge für die Lichtquelle (1) durch den Schaltsignal-Generator (16) periodisch von den ersten auf die zweiten bzw. weiteren Phasenabschnitte gewechselt wird mit einer Halbperiodendauer von 100 $\mu$s bis 1 ms.

**11.** Einrichtung nach Anspruch 9, **dadurch gekennzeichnet,** daß der Phasenmodulationssignalgenerator (17; 28) ein Rechtecksignalgenerator ist.

**12.** Einrichtung nach Anspruch 9, **dadurch gekennzeichnet,** daß zur Vermeidung von Aliasing-Effekten die Zeitspannen der Tastung der einzelnen Phasenabschnitte unter Steuerung durch eine Logikschaltung (15) ungleich lang sind und daß die Logikschaltung die Bezugsfrequenz für den Demodulator (13) vorgibt oder synchronisiert.

**13.** Einrichtung nach Anspruch 9, **dadurch gekennzeichnet,** daß das Auslesesignal des Photodetektors (7) nach Tiefpaßfilterung ein Abtast-Halteglied (19) beaufschlagt, anschließend digitalisiert und einer digitalen Signalverarbeitung zugeführt wird.

**14.** Einrichtung nach Anspruch 13, **dadurch gekennzeichnet,** daß die Auslesesignale mindestens zweier Phasenabschnitte über auf die Zeitspannen dieser Phasenabschnitte synchronisierte Schalter (24) erfaßt und verglichen werden und daß der Vergleich als Maß für den Phasenhub bzw. als Regelsignal für den Phasenmodulator (17) verwendet wird.

## Claims

**1.** Method for demodulating the rate-of-rotation signal of a fibre-optical gyroscope intended for measuring the rate of rotation, in which the partial light beams obtained from a light source (1) by splitting a light beam and radiated into a fibre coil (5) in the opposite direction are subjected to a periodic phase modulation, and for achieving a demodulation of low frequency compared with the phase modulation frequency, the light signal or the read-out signal of the fibre gyroscope is gated synchronously with the phase modulation, before the demodulation characterised in that the gating of the light signal and/or of the read-out signal is controlled in such a manner that during a first time interval, which corresponds to an integral multiple of the period of the phase modulation signal, only a particular first phase section of the periodic output signal of the gyroscope is passed for further processing to an electronic evaluation circuit, and in that after the first time interval, during a second or, if necessary, further successive time intervals which in each case also correspond to an integral multiple of the period of the phase modulation signal, only a second or, if necessary, successively in each case only one further phase section of the periodic output signal of the gyroscope is passed to the electronic evaluation circuit, in such a manner that after a plurality, corresponding to the number of individual phase sections, of gating sequence cycles, an entire period, composed of the individual phase sections, of the gyroscope output signal is detected,

- this gating sequence cycle is continuously repeated
- the output signals of in each case one phase section detected by the gating process are averaged over the period of the respective time interval, and
- the averaged signals of the individual phase sections thus obtained are demodulated in tune with the gating sequence cycles to obtain a rate-of-rotation-proportional signal.

2. Method according to Claim 1, characterised in that the period of the phase modulation signal is matched to about twice the transit time of the light in the fibre coil (5), the gating sequence of the light signal or of the read-out signal, respectively, is alternated in such a manner that first of all phase sections with read-out signal referred to the positive phase deviation of the phase modulation signal and then phase sections with read-out signal referred to the negative phase deviation are detected, and the rate-of-rotation-proportional signal is output directly as a measure of the rate of rotation.

3. Method according to Claim 1, characterised in that the period of the phase modulation signal is selected to be unequal to twice the transit time of the light for the fibre coil (5) and is preferably matched to about four times the transit time of the light through the fibre coil (5), in that the gating sequence of the light signal or of the read-out signal, respectively, is alternated in such a manner that first of all first phase sections with read-out signal ($I^+$) referred to the positive phase deviation of the phase modulation signal and then second phase sections with read-out signal ($I_1$) referred to the light intensity, furthermore third phase sections with read-out signal ($I^-$) referred to the negative phase deviation of the phase modulation signal and then fourth phase sections with read-out signal ($I_2$) referred to the light intensity are detected, and the averaged read-out signals referred to the first and third phase sections are demodulated as rate-of-rotation-proportional signal and the averaged read-out signals referred to the second and fourth phase sections are compared with the signals from the first and third phase section and used for modulator phase stabilisation.

4. Method according to Claim 1, characterised in that the gating sequence is periodically alternated with a half-period duration of about 100 $\mu$s to 1 ms.

5. Method according to Claim 1, characterised in that the gating sequence is alternated at an aperiodic alternating frequency for avoiding aliasing effects.

6. Method according to Claim 1, characterised in that the averaged signals from various phase sections are averaged with different signs during the demodulation of the rate-of-rotation signal.

7. Method according to Claim 1, characterised in that the read-out signal components of various phase sections are supplied via sequentially driveable switches (24) to low-pass filters (25) and the rate of rotation is obtained from the averaged phase section signals thus obtained.

8. Method according to one of the preceding claims, characterised in that the light source (1) is operated with invariably identical light intensity, that is to say the same exciter current amplitude, and is gated with pulses, the time ($t_p$) of which is slightly shorter than the transit time of the light in the fibre coil (5).

9. Demodulator for a rate-of-rotation signal of a fibre-optical gyroscope intended for measuring the rate of rotation, particularly a Sagnac interferometer, in which a light beam emanating from a light source (1), conducted via a fibre path, passes through a first directional coupler (2), one output of which is connected to a photodetector (7) for the read-out signal, and is split in a second directional coupler (4) into two partial light beams which are radiated into a fibre coil (5) in the opposite direction and are periodically modulated by a phase modulator (6) driven by a modulation signal generator (17; 28), and in which a read-out signal of the photodetector (7) is demodulated and directly output as rate of rotation or used as restoring signal in gyroscope electronics, characterised by

- a switching signal generator (16) for the gated control of the light source (1) in such a manner that during a first time interval, which corresponds to an integral multiple of the period of the phase modulation signal, only a particular first phase section of the periodic output signal of the gyroscope occurs for further processing by the demodulation and evaluation circuit,

11

- a logic circuit (15; 27) for triggering the switching signal generator (16) in such a manner that, after the first time interval, during a second time interval or, if necessary, during successive further time intervals, which in each case correspond to an integral multiple of the period of the phase modulation signal, only a second, or successively in each case only one further phase section of the periodic output signal of the interferometer occurs, in such a manner that after a plurality, corresponding to the number of individual phase sections detected, of gating sequence cycles, an entire period composed of the sequence of phase sections detected, of the gyroscope output signal is detected and that this gating sequence cycle is continuously repeated,
- a circuit for averaging the output signals of the phase sections detected by the gating process are averaged over the period of the respective time interval, and
- a demodulator synchronised to the gating sequence (13; 19, 20, 22; 13, 29, 30, 31) for obtaining the rate-of-rotation signal.

**10.** Device according to Claim 9, characterised in that the gating signals sequence of the light source (1) is periodically alternated with a half-period duration of 100 $\mu$s to 1 ms from the first to the second or further phase sections by the switching signal generator (16).

**11.** Device according to Claim 9, characterised in that the phase modulation signal generator (17; 28) is a squarewave signal generator.

**12.** Device according to Claim 9, characterised in that, for avoiding aliasing effects, the time intervals of the gating of the individual phase sections under control by a logic circuit (15) are of unequal length, and the logic circuit predetermines or synchronises the reference frequency for the demodulator (13).

**13.** Device according to Claim 9, characterised in that the read-out signal of the photodetector (7), after low-pass filtering is applied to a sample-hold circuit (19), subsequently digitised and supplied to a digital signal processor.

**14.** Device according to Claim 13, characterised in that the read-out signals of at least two phase sections are detected via switches (24) synchronised to the time intervals of these phase sections and are compared, and the comparison is used as a measure of the phase deviation or as control signal for the phase modulator (17).

**Revendications**

**1.** Procédé pour la démodulation du signal de la vitesse angulaire d'un gyroscope à fibres optiques destiné à la mesure de la vitesse angulaire, dans lequel les faisceaux lumineux partiels envoyés en sens opposé dans une bobine de fibres (5) et obtenus à partir d'une source de lumière (1) par division de faisceau, sont soumis à une modulation de phase périodique et dans lequel, pour l'obtention d'une démodulation à fréquence basse par rapport à la fréquence de la modulation de phase, le signal lumineux ou le signal de sélection du gyroscope à fibres optiques est déclenché de manière synchrone avec la modulation de phase avant la démodulation,
**caractérisé en ce** que le déclenchement du signal lumineux et respectivement du signal de sélection est commandé de telle façon que, pendant un premier intervalle de temps correspondant à un multiple entier de la période du signal de modulation de phase, seule une première section de phase déterminée du signal de sortie périodique du gyroscope est transmise pour traitement ultérieur à un circuit d'analyse électronique, et qu'après le premier intervalle de temps, au cours d'un second intervalle de temps ou le cas échéant d'autres intervalles de temps consécutifs qui correspondent à chaque fois à un multiple entier de la période du signal de modulation de phase, seule une seconde section de phase ou éventuellement en succession seule une section de phase supplémentaire du signal de sortie du gyroscope est transmise au circuit d'analyse électronique, de manière que, après une pluralité de changements de séquence de déclenchements correspondant au nombre des différentes sections de phase, une période entière du signal de sortie du gyroscope composée des différentes sections de phase est détectée,
- que ce changement de séquence de déclenchements est répété en permanence,
- que la moyenne des signaux de sortie de respectivement une section de phase détectée par le déclenchement est calculée en fonction de la durée de l'intervalle de temps respectif, et

- que les signaux moyens des différentes sections de phase ainsi obtenus sont démoulés en accord avec le changement de séquence de déclenchements pour obtenir un signal proportionnel à la vitesse angulaire.

2. Procédé selon la revendication 1, caractérisé en ce que la période du signal de modulation de phase est adaptée sensiblement au double du temps de propagation de la lumière dans la bobine de fibres (5), que le changement de séquence de déclenchements du signal lumineux et respectivement du signal de sélection intervient de manière à détecter tout d'abord des sections de phase avec le signal de sélection rapporté à la déviation de phase positive du signal de modulation de phase et ensuite des sections de phase avec le signal de sélection rapporté à la déviation de phase négative, et que le signal proportionnel à la vitesse angulaire est sorti directement comme critère pour la vitesse angulaire.

3. Procédé selon la revendication 1, caractérisé en ce que la période du signal de modulation de phase est choisie de telle façon qu'elle diffère du double du temps de propagation de la lumière par la bobine de fibres (5) et qu'elle est de préférence adaptée à environ le quadruple du temps de propagation de la lumière par la bobine de fibres (5), que le changement de séquence de déclenchements du signal lumineux et respectivement du signal de sélection est réalisé de façon à détecter tout d'abord des premières sections de phase avec le signal de sélection ($I^+$) rapporté à la déviation de phase positive du signal de modulation de phase, puis des secondes sections de phase avec le signal de sélection ($I_1$) rapporté à l'intensité lumineuse, des troisièmes sections de phase avec le signal de sélection ($I^-$) rapporté à la déviation de phase négative du signal de modulation de phase, et ensuite des quatrièmes sections de phase avec le signal de sélection ($I_2$) rapporté à l'intensité lumineuse, que les signaux de sélection moyens rapportés aux premières et troisièmes sections de phase sont démodulés en tant que signal proportionnel à la vitesse angulaire, et que les signaux de sélection moyens rapportés aux secondes et quatrièmes sections de phase sont comparés avec les signaux rapportés aux premières et troisièmes sections de phase et utilisés pour la stabilisation de la phase du modulateur.

4. Procédé selon la revendication 1, caractérisé en ce que le changement de séquence de déclenchements intervient périodiquement avec une durée de demi-période d'environ 100 $\mu$s à 1 ms.

5. Procédé selon la revendication 1, caractérisé en ce que le changement de séquence de déclenchements intervient à une fréquence d'alternance apériodique pour éviter des effets de dépliage de fréquence.

6. Procédé selon la revendication 1, caractérisé en ce que, lors de la démodulation du signal de vitesse angulaire, la moyenne des signaux moyens est faite à partir de différentes sections de phase avec des signes différents.

7. Procédé selon la revendication 1, caractérisé en ce que les composantes des signaux de sélection de différentes sections de phase sont transmises, par l'intermédiaire de commutateurs (24) pouvant être commandés de manière séquentielle, à des filtres passe-bas (25), et que la vitesse angulaire est obtenue à partir des signaux de sections de phase moyens ainsi obtenus.

8. Procédé selon l'une des revendications précédentes, caractérisé en ce que la source de lumière (1) fonctionne toujours à la même intensité lumineuse, c'est-à-dire avec la même amplitude du courant d'excitation, et qu'elle est déclenchée avec des impulsions dont la durée ($t_p$) est légèrement inférieure au temps de propagation de la lumière dans la bobine des fibres (5).

9. Démodulateur pour un signal de vitesse angulaire d'un gyroscope à fibres optiques destiné à la mesure de la vitesse angulaire, en particulier d'un interféromètre de Sagnac, dans lequel un faisceau lumineux émis par une source de lumière (1) et guidé par une section de fibres, parcourt un premier coupleur directif (2) à la sortie duquel est relié un photodétecteur (7) pour le signal de sélection, et est divisé dans un second coupleur directif (4) en deux faisceaux lumineux partiels qui sont envoyés en sens opposé dans une bobine de fibres (5) et modulés périodiquement par un modulateur de phase (6) commandé par un générateur de signaux de modulation (17; 28), et dans lequel un signal de sélection du photodétecteur (7) est démodulé et sorti directement en tant que vitesse angulaire ou utilisé en tant que signal de remise à zéro dans une électronique de gyroscope, **caractérisé en ce** qu'il comprend

- un générateur de signaux de commutation (16) pour la commande impulsionnelle de la source de lumière (1) de telle façon que, pendant un premier intervalle de temps correspondant à un multiple entier de la période du signal de modulation de phase, seule une première section de phase déterminée du signal de sélection périodique du gyroscope est détectée pour le traitement ultérieur par le circuit de démodulation et d'analyse,
- un circuit logique (15; 27) pour le déclenchement du générateur de signaux de commutation (16) de telle façon que, après le premier intervalle de temps, au cours d'un second intervalle de temps ou éventuellement pendant d'autres intervalles de temps consécutifs qui correspondent à chaque fois à un multiple entier de la période du signal de modulation de phase, seule est détectée une seconde section de phase ou éventuellement en succession seulement une section de phase supplémentaire du signal de sortie de l'interféromètre de manière que, après une pluralité de changements de séquence de déclenchements correspondant au nombre des différentes sections de phase, une période entière du signal de sortie du gyroscope composée des différentes sections de phase est détecté, et que ce changement de séquence de déclenchements est répété en permanence,
- un circuit pour le calcul de la moyenne des signaux de sortie des sections de phase détectées par le déclenchement en fonction de la durée de l'intervalle de temps respectif, et
- un démodulateur (13; 19, 20, 22; 13, 29, 30, 31) synchronisé avec la séquence de déclenchements et fournissant le signal de vitesse angulaire.

10. Dispositif selon la revendication 9, caractérisé en ce que la séquence de signaux de déclenchement pour la source de lumière (1) est commutée de manière périodique par le générateur de signaux de commutation (16) entre les premières et les secondes ou autres sections de phase avec une durée de demi-période de 100 $\mu$s à 1 ms.

11. Dispositif selon la revendication 9, caractérisé en ce que le générateur de signaux de modulation de phase (17; 28) est un générateur de signaux rectangulaires.

12. Dispositif selon la revendication 9, caractérisé en ce que, pour éviter des effets de dépliage de fréquence,les inte valles de temps du déclenchement des différentes sections de phase, avec commande par un circuit logique (15), présentent des longueurs différentes, et que le circuit logique prédétermine ou synchronise la fréquence de référence pour le démodulateur (13).

13. Dispositif selon la revendication 9, caractérisé en ce que le signal de sélection du photodétecteur (7) est appliqué, après un filtrage passe-bas, à un élément d'exploration-maintien (19), puis numérisé et transmis à un système de traitement numérique des signaux.

14. Dispositif selon la revendication 13, caractérisé en ce que les signaux de sélection d'au moins deux sections de phase sont détectés et comparés par l'intermédiaire de commutateurs (24) synchronisés avec les intervalles de temps de ces sections de phase, et que la comparaison est utilisée comme critère pour la déviation de phase et respectivement comme signal de régulation pour le modulateur de phase (17).

14

Fig.1

# Fig.2a

$\phi(t)$

$\tau$

# Fig.2b

$\phi(t) - \phi(t-\tau)$

# Fig.2c

$I(t)$

$I^+$  $I^-$  $I^+$  $I^-$  $I^+$  $I^-$  $I^+$

# Fig.2d

$i_{Lichtquelle}$

$t_p$

$T$

Fig.2e

Fig.2f

Fig.2g

Fig.2h

# Fig.3

Generator 16

Logik-schaltung 15

10 2d 9 2e 8 2a

11 12 2f

13 2h

16 2g

14

18

17

Fig 4a

Fig 4b

Fig 4c

Fig 4d

# Fig.5

# Fig.6

Fig.7a

$I_2$   $I^+$   $I_1$   $I^-$   $I_2$   $I^+$

Fig.7b

Fig.7c

Fig.7d

Fig.7e

Fig.7f

Fig.7g

$U_0$

$T^+$   $T^-$